# EUROPEAN PATENT APPLICATION

(11) **EP 1 862 082 A2**
(43) Date of publication of application: **05.12.2007**
(21) Application number: 06123356.5
(22) Date of filing: 02.11.2006
(51) Int. Cl.: A23L 3/00, A23L 3/10

(54) **Process fluid application system for agitating retorts**

(30) Priority: 02.06.2006 US 445922
(71) Applicant: FMC Technologies, Inc., Houston, TX 77067 (US)
(72) Inventor: Persoons, Gustaaf M.L., 2960, Brecht (BE); DeCock, Hans, 9100, Sint Niklass (BE)
(74) Representative: Andersson, Mikael Per Robert

(57) **Abstract**

A process fluid distribution system (67) of an agitating retort (50) directs process fluid at the sides (164, 166) of stacks (58) of containers (96) containing foodstuffs or other produces for processing. The sides (164, 166) of the stacks (58) are designed to minimize obstruction to the flow of processing fluid directed toward the stacks by arrays of spray nozzles (68) located alongside the stacks.

## Description

### TECHNICAL FIELD

The present invention relates to retort systems for in-container preservation of foodstuffs, and more particularly to a system for supplying processing fluid to the interior of the retort drum.

### BACKGROUND

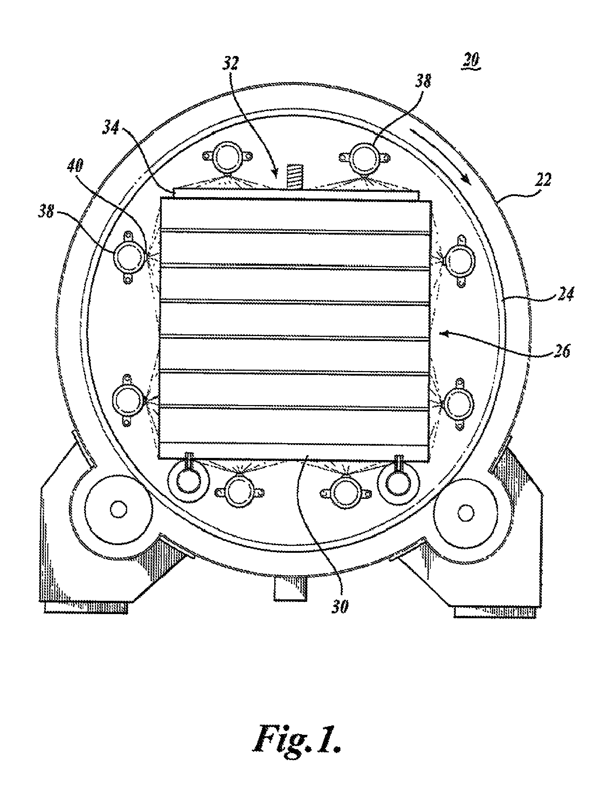

Agitating retorts are widely used for in-container preservation of foodstuffs, either for pasteurization or sterilization processes. Referring initially to FIGURE 1 commonly an agitating retort 20 consists of an outer retort shell 22 that houses a drum 24 for rotation within the shell. The drum is adapted to receive baskets 26 or other structure within which are containers of foodstuffs or other products to be processed. Alternatively, the foodstuff containers may be arranged on single-level trays (not shown) carried by pallets 30. Such trays are disclosed by co-pending patent application U.S. Serial No. 10/631,492, incorporated herein by reference.

The baskets of foodstuff containers are held in place within the drum by a clamping system 32 to restrain the baskets and containers during the retorting process. The clamping system includes a pallet 30 at the base of the basket and a pressure plate 34 at the top basket to be forced downward onto the load by an actuator.

The retorting process may be of various types, including water spray, combined water and steam spray, and water immersion. In the water spray and combined water and steam spray process, the processing fluid is typically supplied through an inlet in the shell, and then through lines, tubes, or pipes 38 running the length of the drum 24. In FIGURE 1, eight pipes 38 are employed, two at every quadrant. Injection holes or nozzles 40 are disposed along the length of the pipes 38 for directing the processing fluid toward the containers disposed within the rotating drum.

The pressure plate 34, as well as the basket 26 or the individual trays of a stack, need to be perforated in order to allow the process medium to reach the innermost food containers of the load. However, for constructional reasons, the perforation is limited. hence restricting the flow of the processing medium.

### SUMMARY

An agitating retort receives one or more stacks containing product to be processed. During processing, processing fluid is sprayed on the stacks as the stacks rotate within the retort. A processing fluid distribution system applies the processing fluid to the stacks in a uniform manner. The process fluid distribution system includes banks or arrays of spray nozzles directed toward the sides of the stacks. The stacks are designed to minimize obstruction of the process fluid emitted from the spray nozzles.

The process fluid distribution system includes banks of distribution tubes extending along the sides of the stacks. The process fluid nozzles are in fluid flow communication with the distribution tubes.

The spray nozzles are of a solid cone type. Such nozzles direct a solid cone of process fluid at one or more of the stacks.

The spray nozzles are positioned relative to each other to direct a substantially uniform level of process fluid to each of the stacks. One manner in which this may be achieved is by adjusting the positions of the spray nozzles relative to each other to compensate for variations in process fluid pressure at the nozzles of the different stack/basket positions.

The agitating retort may include a drum structure for receiving one or more stacks therein. The drum structure is adapted to rotate about a rotational axis with the stacks held and retained in stationary position within the drum structure during rotation.

### BRIEF DESCRIPTION OF THE DRAWINGS

FIGURE 1 is a schematic cross-sectional view of an agitating retort;
FIGURE 2 is a schematic cross-sectional view of an agitating retort in accordance with the present disclosure;
FIGURE 3 is an isometric view of a stack composed of a basket with containers therein:
FIGURE 4 is a side elevational schematic view of a basket:
FIGURE 5 is a further side elevational view of a basket;
FIGURE 6 is a further side elevational view of a basket;
FIGURE 7 is an isometric view of a stack in the form of a plurality of trays;
FIGURE 8 is a cross-sectional schematic view of a further agitating retort of the present disclosure;
FIGURE 9A is a schematic top cross-sectional view of an agitating retort of the present disclosure:
FIGURE 9B is a plot of the pressure of the processing fluid along the length of the agitating retort shown in FIGURE 9A:
FIGURE 9C is a plot of the average flow of processing fluid along the length of the agitating retort of FIGURE 9A:
FIGURE 10 is another cross-sectional schematic view of an agitating retort of the present disclosure:
FIGURE 11 is an enlarged, schematic view of a length of spray tube and associated nozzles;
FIGURE 12 is a schematic view of the agitating retort of FIGURE 2 illustrating the level of process fluid penetration with the stack in nominal orientation;
FIGURE 13 is a view similar to FIGURE 12. but with the stack rotated 90 degrees clockwise;
FIGURE 14 is a cross-sectional schematic view of the agitating retort of FIGURE 1 illustrating processing fluid penetration with the stack shown in nominal position:
FIGURE 15 is a view similar to FIGURE 14 but with the stack rotated 90 degrees clockwise:
FIGURE 16 is a view similar to FIGURE 15, but with the stack rotated 90 degrees further clockwise; and
FIGURES 17A-17E illustrate the process fluid penetration achieved by the agitating retort of FIGURE 8. with FIGURE 17A illustrating the stack in nominal position, and with each of the subsequent figures showing the stack rotated 45 degrees further clockwise.

### DETAILED DESCRIPTION

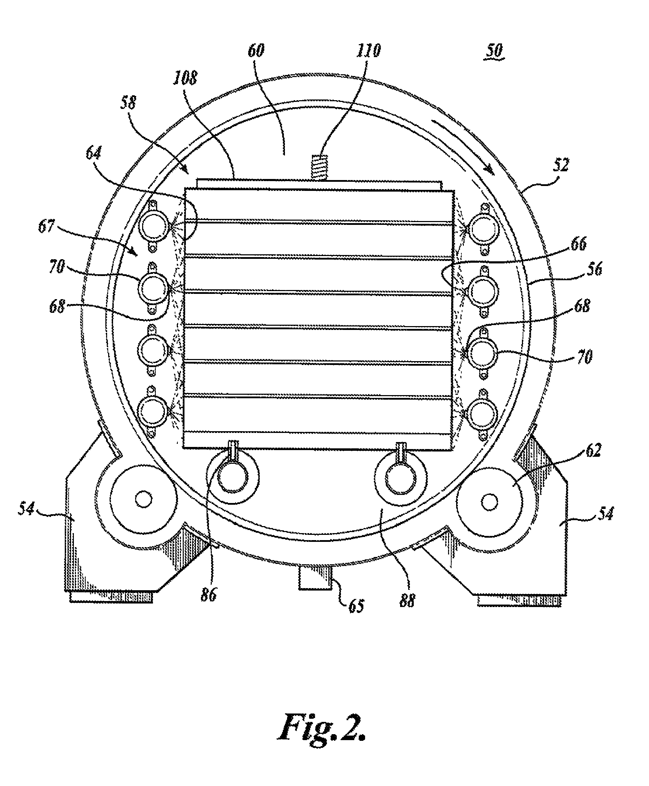

FIGURE 2 illustrates an agitating retort 50 for in-container pasteurization of sterilization of foodstuffs. The agitating retort is illustrated as including an outer vessel or shell 32 mounted on support legs 54 to house a rotatable drum structure 56 therein. The shell may be in the form of a generally cylindrically shaped pressure vessel. The drum 56 is adapted to receive stacks 58 consisting of containers of foodstuffs or other products to be processed. The containers may be in the form of cans glass jars, paperboard containers, etc. The stacks 58 are described more fully below.

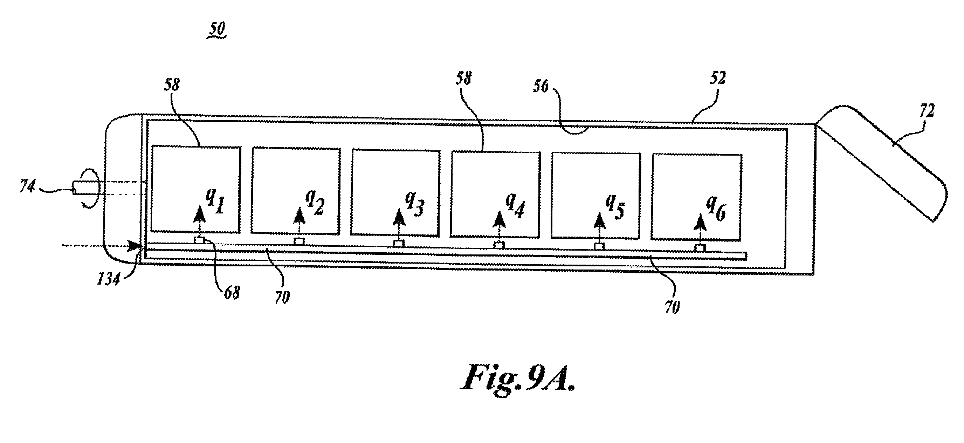

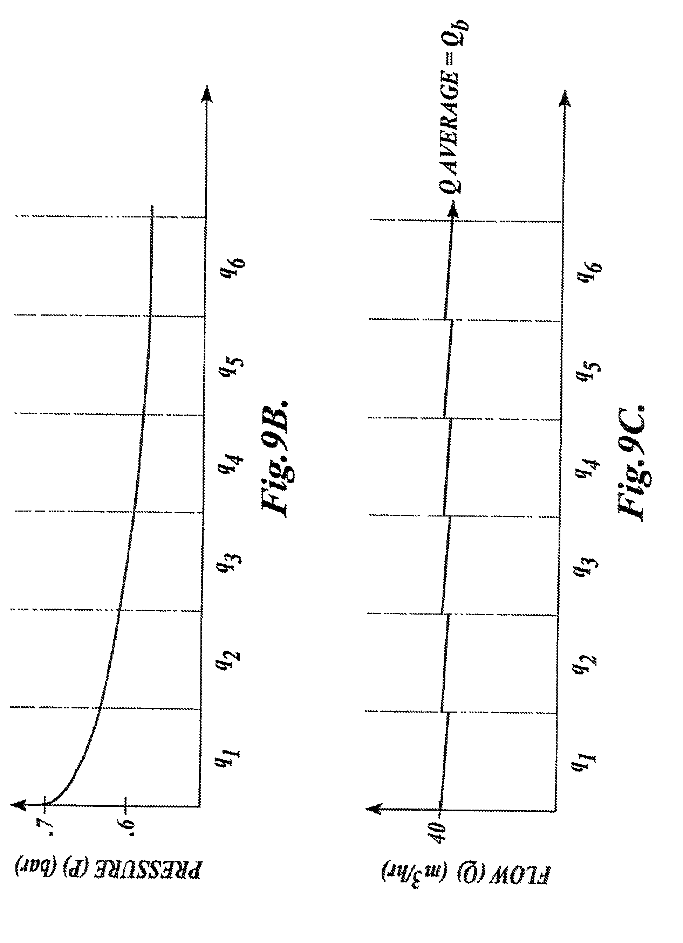

The stacks 58 are held in place by a clamping system 60 to retain and support the stacks during rotation of the drum 56. During rotation, the drum 56 is supported by rollers 62. Such rollers may be powered for rotation of the drum, or the drum may be rotated by a separate mechanism, for example, a driveshaft 74 at one end of the drum, see FIGURE 9A. A processing fluid distribution system 67 directs processing fluid at the sides 64 and 66 of the stacks by use of nozzles 68 mounted on an array of spray tubes 70 positioned outwardly adjacent the stack sides 64 and 66.

Describing the foregoing elements in greater detail, as noted above, the shell 52 may be in the form of a generally cylindrical pressure vessel for retort. Referring to FIGURE 9A. the shell 52 and drum 56 are of sufficient length to receive within the drum a plurality of stacks 58. A door 72 is employed to gain access to the interior of the shell 52 and the drum 56. At the opposite end of the retort, a driveshaft 74 is schematically illustrated for use in rotating the drum 56 during processing operations, An outlet 65 is provided at the bottom of the shell 52 to drain processing fluid from the shell, perhaps for recirculation. Examples of agitating retorts having shells and drums of the foregoing nature are disclosed in U.S. Patent Nos. 5,676,047 and incorporated herein by reference. As noted above, rather than using driveshaft 74. the drum 56 may instead, be rotated by powering one or more of the drum support roller 62.

The drum 56 can be of various constructions. For example, the drum may be constructed from a number of spaced apart vertical disks (not shown) that are joined together by a series of longitudinal tube structures (not shown) spaced about the perimeter portion of the disks to provide structural strength of the drum- Reinforcing braces (not shown) may be welded or otherwise affixed between the tubes in a crisscross or other pattern and for further structural strength and or rigidity. An example of drums of this type of construction are set forth in U.S. patent application No. 10/810,898. incorporated herein by reference. In the alternative, the drum may be in the form of a cylindrical structure with openings formed therein to allow circulation and passage of processing fluids.

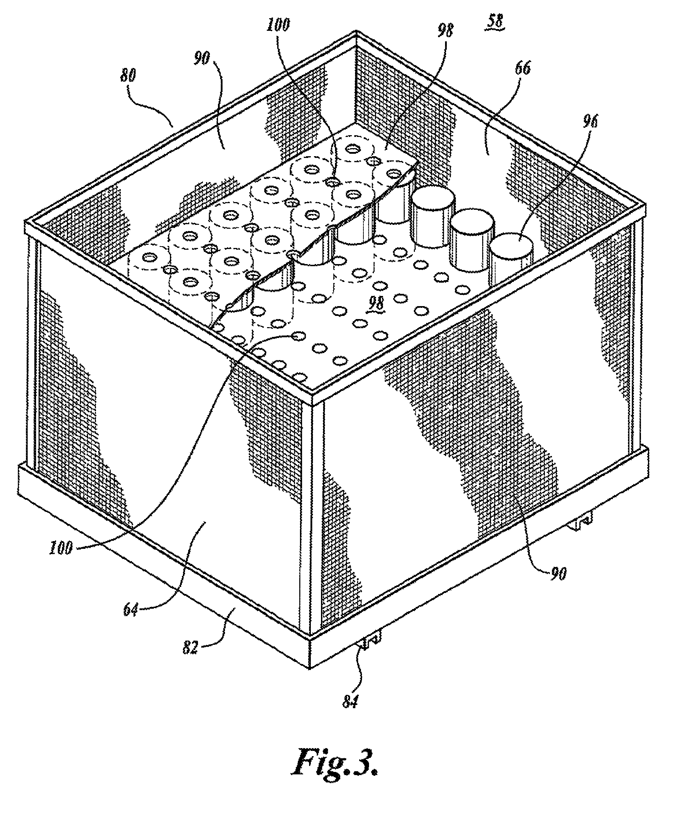

The stacks 50 can be of various configurations. For example, referring to FIGURE 3, the stack may be in the form of a basket stack 80 comprising rectilinear basket structure having a bottom or floor structure 82 and a pair of parallel, spaced apart guides 84 that align with rollers 86 of a conveying system 88 to move stacks 58 into and out of the agitating retort 50 in a well-known manner, see FIGURE 2. The sidewalls 64 and 66, as well as the end walls 90 of the basket 80 are shown as composed of perforated material to allow passage of processing fluid into and out of the basket. Containers 96 are stacked within the basket 80 in layers with layer pads 98 placed between the layers of the containers 96. The layer pads 98 include apertures 100 to allow passage of processing fluid between the layers. The layers may be contoured or otherwise formed to help retain the containers 96 in uniform spaced apart relationship to each other.

During rotation of the drum 56, the basket 80 and containers 96 are held stationary to the drum by a clamping system 60. The clamping system may include a pressure plate 108. sized to fit within the basket 80, thereby to apply force against the top layer of containers 96. Such force may be applied by various means, for example, by pneumatic cylinders 110 or other types of actuators or systems. Such clamping systems are well known in the art.

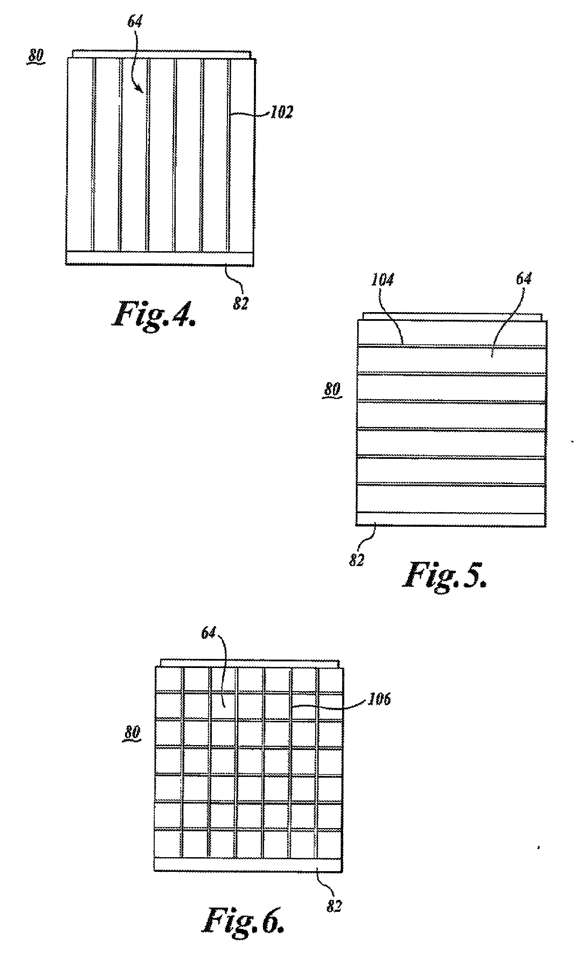

The walls of the basket 80, including sidewall 64 and 66 and endwalls 90, may be of a structure or construction other than as shown in FIGURE 3. For example, the sidewalls may be in the form of vertical, parallel bars 112 or parallel horizontal bars 114, as shown in FIGURES 4 and 5. As an alternative, walls of the basket may be composed of a combination of vertical and horizontal rods, a wire mesh 116 or other construction providing sufficient openness to allow passage of processing fluid. The openness of the basket walls should be as much as possible so as to minimize hindrance to process fluid penetration. Of course, the present invention will function with a lesser degree of openness than illustrated, though perhaps not as efficiently as if a greater amount of openness existed.

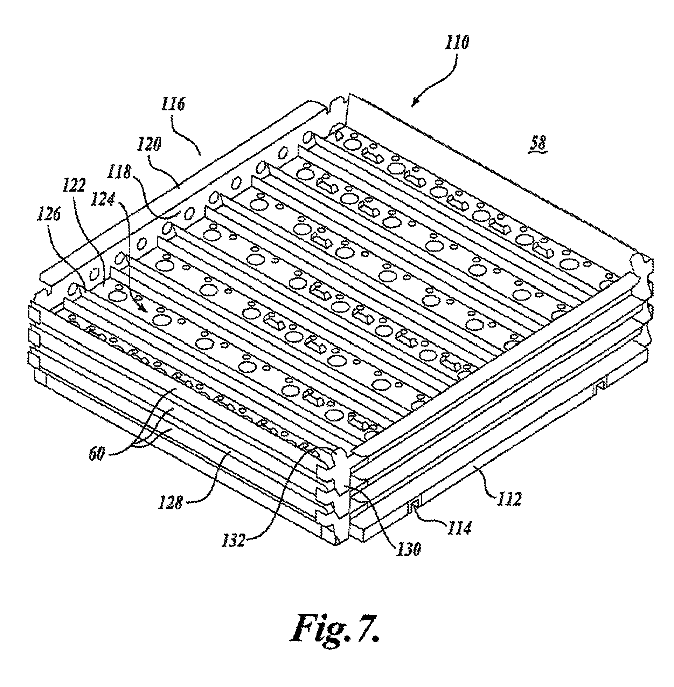

FIGURE 7 illustrates another form of stack 58, composed of a plurality of trays 110 which are stackable on top of each other, with the lowermost tray supported by a base or dolly 112. The base includes guides 114 which are structurally and functionally similar to guides 84 described above with respect to the stack shown in FIGURE 3. As shown in FIGURE 7, each tray 110 is composed of two parallel end rails 116 having an upright web portion 118 and a top, horizontal, outwardly extending flange portion 120. This "L-shape" construction adds rigidity to the end rails. The end rails are interconnected by a series of spaced apart longitudinal channels 122, each having a horizontal floor or web portion 124 and upwardly extending side flange portions 126. the channels 122 are sized to support containers, such as containers 96, on the floor portions 122 of the channels. Both the channel floor 124 and the end rail webs 118 have holes or perforations formed therein to allow passage of processing fluid. Also, in the channels at the outer sides of the trays 110, the flanges 126 do not extend vertically upwardly to the full height of the end rail webs 118 thereby to provide gaps or openings 128 between vertically stacked trays 110 thereby to allow processing fluid to pass through the spaces or gaps 128. Ideally, the area of each gap 128 is relatively large in comparison to the area of the channel flange 126 thereby to permit processing fluid to readily reach the interior portions of the trays 110. As a non-limiting example the area of the gaps 128 may be at least as large as the areas of the channel flanges 126.

Still referring to FIGURE 7, each of the trays 110 include corner tabs 130 that extend downwardly from each corner of the trays to overlap an upwardly extending tab 132 of the next lower tray, thereby providing support and constraint between the trays and to allow the trays to conveniently nest with each other. When the trays 110 are stacked on top of each other the end rails 116 bear against each other to carry the weight of the stack rather than having the weight carried through the containers disposed on the trays. As in stack 58 shown in FIGURE 3, the stack shown in FIGURE 7 is retained in place by clamping system 106. The clamping plate 108 may bear against the flanges 120 of the uppermost tray 110 to hold the stack in place. Other means may be provided to retain the containers 96 in place on the trays 110. examples of such means are disclosed in U.S. Patent Application No. 10/631.492.

Referring back to FIGURE 2, the process fluid distribution system 67 includes arrays or banks or sets of distribution/spray tubes 70 extending along the sides of the interior of the drum 56. Rather than being positioned within the drum, the spray tubes 70 could be positioned outwardly of the drum in the annular space between the drum and the interior of the shell 52. Spray nozzles 68 are mounted on the spray tubes 70 to direct process spray laterally towards the sides 164 and 166 of the stacks 58. FIGURE 2 shows that each array/bank/set is composed of four spray tubes disposed in vertical alignment with each other to extend lengthwise of the drum

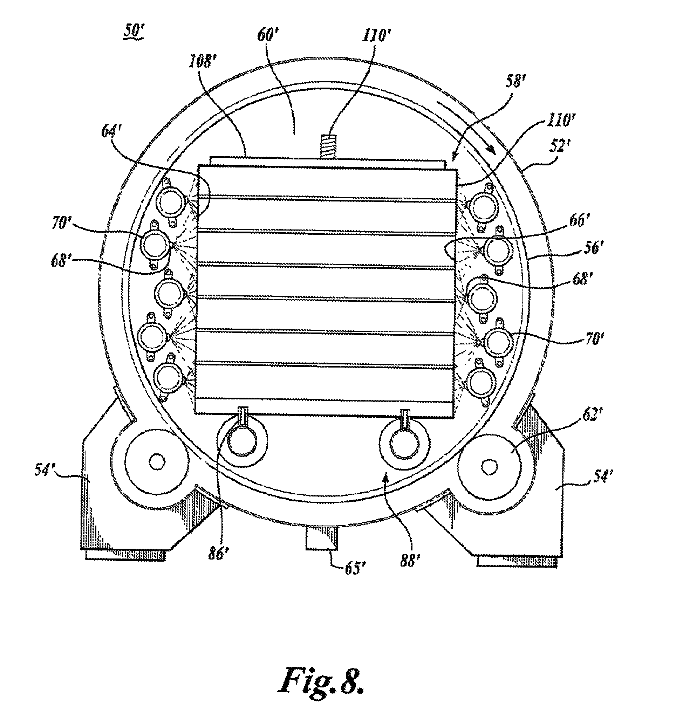

A larger or smaller number of spray tubes could be used, and the spray tubes may be other than in vertical argument. For example, FIGURE 8 shows that each array is composed of five spray tubes 70' vertically spaced apart, but not in vertical alignment. In FIGURE 8, corresponding components are given the same part numbers as in FIGURE 2, but with the prime" ' " designation.

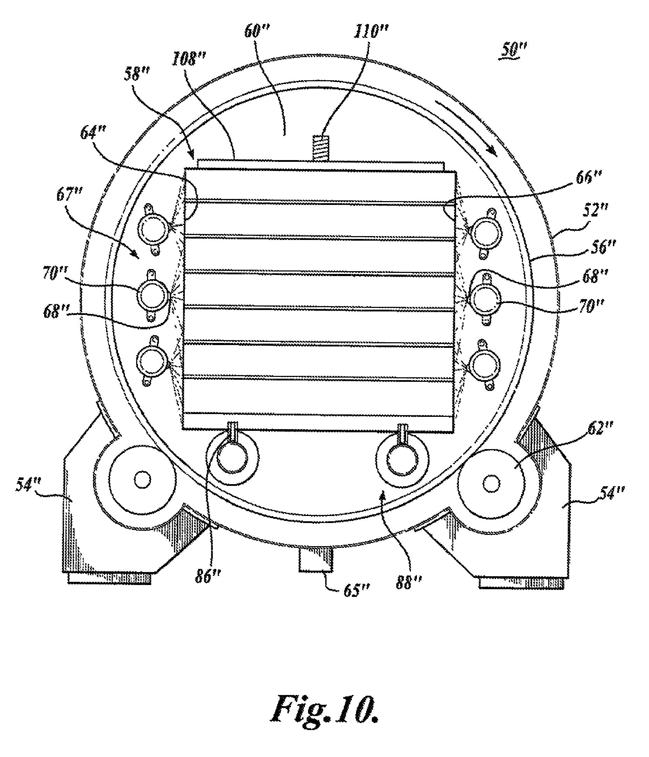

Another variation is shown in FIGURE 10 wherein each array is composed of three vertically spaced apart distribution/spray tubes 70". In FIGURE 10, corresponding components are identified with the same part numbers as in FIGURE 2, but with a double prime """ designation. As will be appreciated, the number of spray tubes, such as tubes 70, 70' or 70", comprising each array will depend on various factors, including the size of the drum, the size of the stacks relative to the size of the drum, the type of product being processed, the density of the containers carried in the stacks, etc. Also, it will be appreciated that the individual spray tubes 70, 70' or 70" of each array may be replaced by a water jacket or manifold, not shown, disposed along each side of the drum laterally outwardly from the sides of the stacks. The nozzles 68 may be mounted directly on such manifolds or jackets, or otherwise connected in fluid flow communication with such manifolds or jackets.

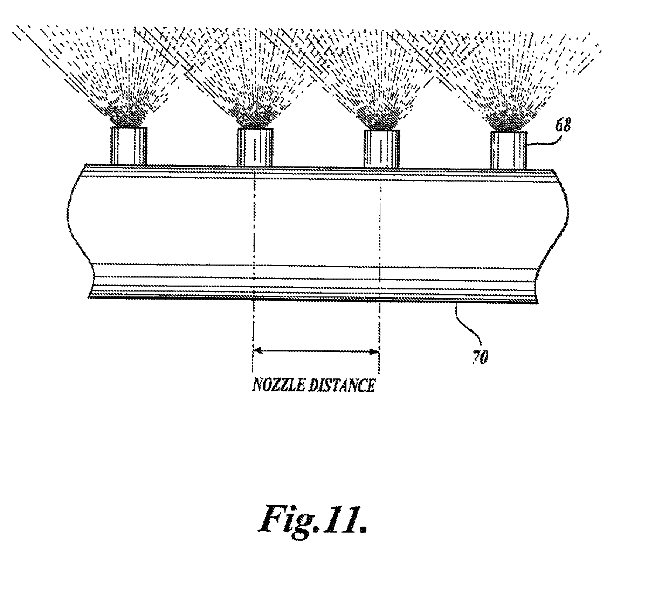

Nozzles 68 are used to direct the process fluid towards the stacks, and in particular primarily towards the sides of the stacks. The nozzles 68 are illustrated in FIGURE 11 as positioned substantially radially to the cross-sectional center of the spray tubes 70. However, the nozzles 68 can be in other relative locations on the spray tubes, especially if it is desired to aim the nozzle other than in a nominally horizontal position or the spray tube can be rotated so that the nozzle is still positioned radially to the cross-sectional center of the spray tube but the centerline of the nozzle is not perpendicular to the stack/baskets. For example, in FIGURE 10, the nozzles 68" are aimed in a nominally slightly upward direction on the upper distribution tube 70", whereas the nozzles 68 of the lower distribution tube 70' are aimed slightly downwardly. Of course, the direction of the nozzle may instead be achieved by using adjustable nozzles designed to allow the spray direction from the nozzle to be changed or altered as desired.

The nozzles 68 may be of a solid cone type. Such nozzles emit fluid as a solid conc. Applicants have found that use of this type of nozzle enables substantially uniform application of process fluid on the stacks. Nonetheless, other types of nozzles could be utilized in conjunction with the present invention, although perhaps with somewhat lesser efficiency. Such other nozzles may include nozzles that produce a hollow cone spray pattern, or various flat spray patterns including flat spray patterns with tapered edges or square edges.

The number of spray tubes 70, the positioning of the spray tubes, the number of nozzles 68. and the positioning of the nozzles are selected so as to provide uniform application of the process fluid on each stack 58 regardless of the position of the stack along the length of the drum, and also to provide good penetration of the process fluid into the interiors of the stacks so as to provide substantially uniform processing of all the containers in a stack. To this end applicants have placed the nozzles 60 to direct processing fluid towards the sides 64 and 66 of the stack and by designing the basket walls and stack trays so that there is as little obstruction as possible to the process fluid spray, thereby enabling the process fluid to effectively penetrate into the interior of the stack.

In an effort to achieve the foregoing goals, the spray nozzles are positioned to direct the process spray in overlapping patterns as shown in the figures, for example, FIGURES 2, 8, 10, and 11. Also, in seeking to achieve the foregoing goals, the locations and relative distances separating the nozzles are adjusted to compensate for the relative pressure of the process fluid at the nozzles. This is illustrated schematically in FIGURES 9A. 9B, and 9C. In FIGURE 9A, a spray tube 70 is shown as extending alongside the stacks 58 for simplicity. For ease of illustration, only one spray tube 70 is shown. Process fluid enters the spray tube 70 at inlet end 134. The volume and pressure of the process fluid typically decrease along the length of tube 70 in the direction away from inlet 134. In this regard, for purposes of practicality, spray tube 70 is typically of a constant diameter along its length.

FIGURE 9A illustrates the pressure of the process fluid along the length of a constant section spray tube 70. As apparent, the relative pressure drop over the nozzles along the tube is greatest near the entrance end 134 of the tube. The pressure drop is a function of the length of the spray tube, its size and the flow level through the tube. Nonetheless, as a non-limiting example, the average pressure of process fluid along spray tube 70 may be approximately about 0.6-0.7 bar. for droplet-impact sensitive containers.

If the same nozzle pattern is used for each of the stacks 58, then differing process fluid flows 91 to 96 would be obtained. However, by adapting the nozzle pattern for each stack location. it is possible to achieve an approximately balanced flow of process fluid per stack. Adjustment of How rate is obtainable by altering the distance between nozzles 68 so as to have more or fewer nozzles supplying process fluid to a particular stack, sec MCURE H. As a non-limiting example. the average flow rate of process fluid to a stack may be approximately 40 - 41 cubic meters/hour. Also, as a non-limiting example the nozzles near the distal end of the retort may be spaced about ten percent closer together than the nozzles located near or at the proximal end of the spray tube (lefthand end shown in FIGURES 9A. 9B, and 9C). By balancing the flow per stack, the temperature distribution of the process fluid along the length of retort can be maintained at basically the same level resulting in substantially equally processed containers, thereby helped to provide optimum product quality. Such product quality includes, but is not limited to, the sterilization achieved, the cooked value, the color, the texture and taste of the food product.

As mentioned above, applicants deem it important to achieve a fairly constant now distribution of the process fluid over the entire side surfaces of the stacks 58 in order to obtain a substantially uniform temperature distribution of the containers within the stacks. This is achieved by employing nozzles with a solid cone pattern and directing these nozzles so that a fairly even flux (process flow per area) is obtained.

Also, to enable the process fluid to reach the interior of the stacks 50, the containers 96 need to be positioned to be spaced apart from each other so that process fluid can pass between adjacent containers. As a non-limiting example, circular cans may be spaced about 2 mm apart from each other due to the thickness of the seams at the top and bottom of the cans. This results in a gap of about 2 mm between the can walls. For rectangular cartons, for example. paperboard cartons, such containers may be spaced from each other about a distance of 10-16 mm or about an average of about 13 mm. Of course, other spacings can be used depending on various factors including, for example, the size of the cartons, the process fluid flow level and the required load penetration.

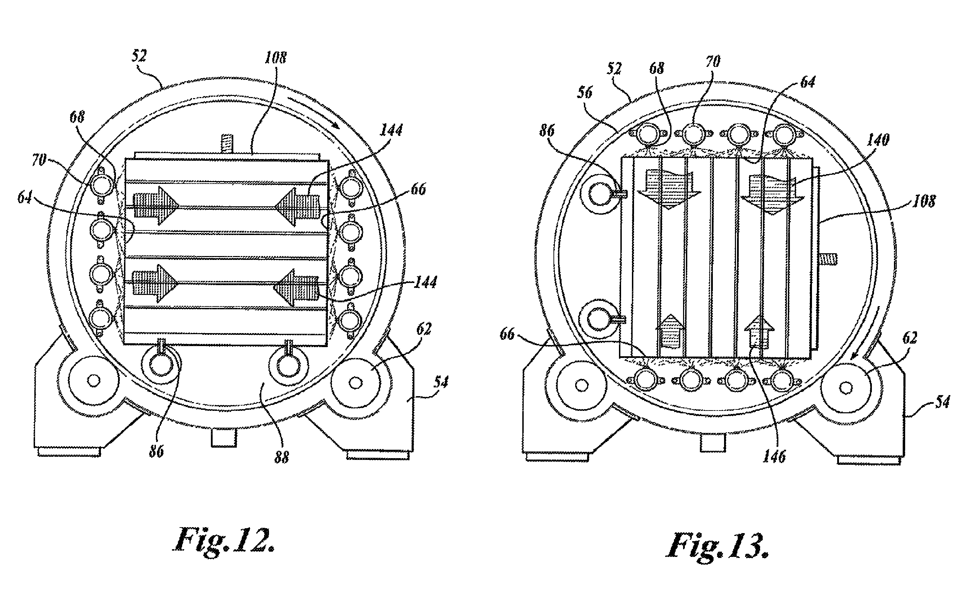

Applicants have carried out tests to evaluate the efficacy of the present invention. The results of the tests are shown in FIGURES 12 and 13 with respect to the spray tube configuration of FIGURE 2, and FIGURES 14-16 with respect to the spray tube configuration of FIGURE 1. In FIGURES 12-16, the widths of the arrows indicate the extent of load penetration achieved: in other words, the quantity of penetration of the processing fluid into the stack. The arrows 140-148 are of decreasing width, and thus indicate a decreasing level of load penetration.

As shown in FIGURE 12. using the configuration of spray tube 70 and nozzle 68 of FIGURE 2. when the stack 58 is in nominal position load penetration of an intermediate level indicated by arrows 144. is achieved. Since all of the nozzles 68 are directed towards the sides 64 and 66 of the stacks, two arrows 144 per side are used to depict the level of load penetration. When the stack rotates 90 degrees in a clockwise direction from FIGURE 12 to FIGURE 13, the nozzles 68 located a the top of the shell with the aid of gravity. achieve the highest load penetration, with two arrows 140 used to indicate that four spray tubes 70 are located above the stack in FIGURE 13. Arrows 146 indicate the level of penetration of the process fluid from the spray tube 70 positioned below the stack in FIGURE 13. Such penetration is somewhat less than achieved when the nozzles 68 are directed horizontally, shown in FIGURE 12. due to the negative effect of gravity when the nozzles are positioned below the stack as in FIGURE 13. Nonetheless, because of the relatively open nature of the stacks 64 and 66. nozzles 68 nonetheless achieve an intermediate level of penetration.

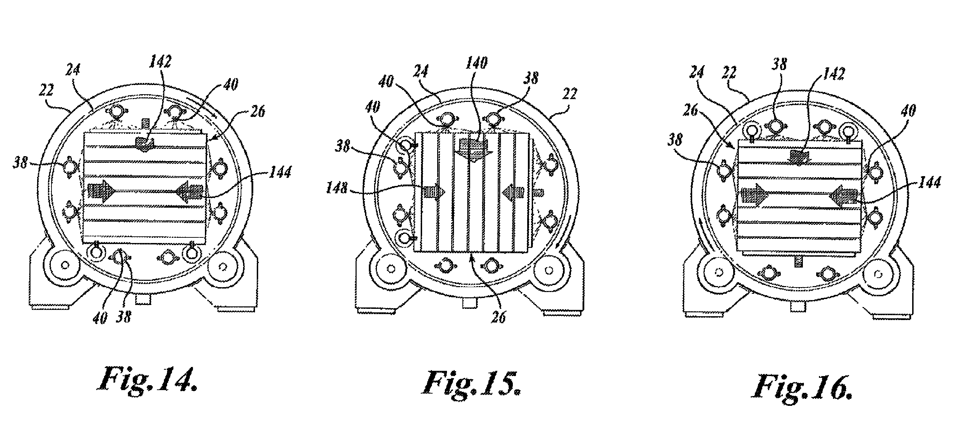

FIGURES 14. 15 and 16 illustrate the level of penetration achieved by the distribution system of the agitating retort configuration of FIGURE 1. In the embodiment of FIGURE 1, during use of the agitating retort, the nozzles 40 located below the stack are turned off because of the reduced effectiveness of such nozzles. FIGURE 14 shows the stack in nominal position (load and unload position), FIGURE 15 shows the stack rotated 90 degrees in the clockwise direction, and FIGURE 16 shows the stack rotated a further 90 degrees in a clockwise direction or a total of 180 degrees from the orientation of FIGURE 14. In FIGURE 14, an intermediate level of penetration is achieved by the nozzles positioned above the stack. Since only two spray tubes 38 are positioned above the stack, only a singular arrow 142 is used to indicate process fluid penetration. The penetration of the nozzles located to the sides of the stack is illustrated by arrow 144 which is of lesser width than arrow 142 to reflect a reduction of load penetration at the side locations.

In FIGURED, a relatively high level of load penetration is achieved by nozzles 40 located above the stack, but since only two spray tubes 38 are located above the stack, the level of penetration is depicted by a singular arrow 140. Also, the nozzles 140 located to the sides of the stack in FIGURE 15 achieve a relatively low level of penetration, due to the effects of gravity and/or hindrance from the stack support structure, and thus are designated by arrows 148. which are of the smallest width among the arrows 140-148. FIGURE 16 results in a load penetration substantially equal to that of FIGURE 14 since the stack is disposed 180 degrees from the orientation of the stack shown in HGVRE 14.

FIGURES 12-16 schematically illustrate that the level of load penetration achieved by locating the spray tube 70 and nozzle 68 as shown in FIGURE 2 is enhanced relative to the level of load penetration achieved by positioning the spray tubes 38 and nozzles 40 as shown in FIGURE 1

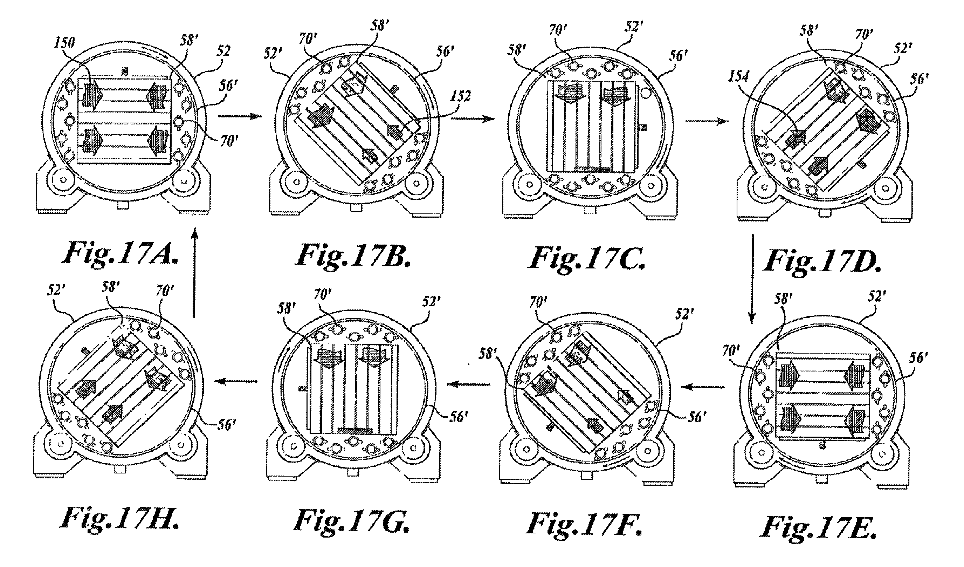

FIGURES 17A-17E illustrate the load penetration achieved by the embodiment shown in FIGURE 8 wherein five spray tubes 70" are arrayed along the sides 64" and 66" of stack 58". In the configuration shown in FIGURE 8, the stack 58" may be composed of trays 110" similar to trays 110 shown in FIGURE 7. In addition, when the spray tubes 70" are positioned beneath the stack 110", for example, as shown in FIGURES 17C and 17G, flow to such spray tubes is discontinued.

As shown in FIGURES 17A-17E, in every orientation of the stack 58" full penetration, as designated by arrows 150, is being achieved at least from one bank or array of spray tubes 70". This occurs when the spray tubes 70" are located from the "9 o'clock" to the "3 o'clock" position. When the spray tubes 70" travel from the 3 o'clock position toward the 6 o'clock position, a decrease in penetration of the process fluid is achieved, as designated by arrow 152. As noted above, when the spray tubes are in the 6 o'clock position, as shown in FIGURES 17C and 17G, flow to the spray tubes may be momentarily discontinued. However, once past the 6 o'clock position as the spray tubes travel towards the 9 o'clock position, an increase in flow, and thus penetration, is achieved by the spray tubes 70", see FIGURES 17D and 17H. The net effect is a relatively high level of process fluid penetration into stack 58" for each rotation of the stack by the agitating retort configuration of FIGURE 8.

In the embodiments shown in the foregoing figures, by positioning the spray tubes to direct process fluid at sides of the stacks and by minimizing obstruction of the processing fluid spray by judicious design of baskets 80 and trays 110, especially the sides thereof, the stack can be heated to operating temperature faster, and processing of a stack can be achieved within a shorter time than with the same number of spray tubes or volume of process fluid but at other positions, for the positions shown in FIGURE 1. Moreover, the embodiments illustrated allow for processing of the stacks to occur at a lower flow level of the processing fluid, and thus enabling the use of smaller distribution/circulation system components than in other agitating retort configurations. for example, the configuration of FIGURE 1. As a result, a lower cost of the agitating retort is achieved. Moreover, the impact of the processing fluid spray on containers, for example, paperboard containers. can be lower which is of significant benefit in retaining the packaging quality of the paperboard containers.

While preferred embodiments of the invention have been illustrated and described, it will be appreciated that various changes can be made therein without departing from the spirit and scope of the invention. For example, to achieve a uniform quantity of processing fluid to each stack, the size of the nozzles, such as nozzles 60, can be varied to compensate for variations or changes or reductions in processing fluid pressure along the length of the spray tubes 70, 70'. 70".

As another example, the processing fluid in the spray tubes can be at different pressures depending on the position of the spray tube. thereby to achieve a desired penetration of the processing fluid. In addition, process fluid may be momentarily shut off or the flow level reduced depending on the position of the spray tube. As described above, when the spray tube is at the 6 o'clock position, the process fluid of the spray tube may be momentarily shut off because of the reduced penetration achieved at the 6 o'clock position.

## Claims

1. An agitating retort for processing at least one stack, comprising:
a drum structure for receiving the at least one stacks
a system for rotating the drum structure about a rotational axis with the at least one stack within the drum structure; and
a processing fluid distribution system having portions rotatable with the drum structure, said process fluid distribution system comprising a plurality of process fluid spray nozzles disposed along the drum structure in two spaced apart sets, said sets of spray nozzles positioned diametrical opposed from each other relative to the rotational axis of the drum to direct processing fluid at the at least one stack during operation of the agitating retort

2. An agitating retort according to Claim 1, wherein the processing fluid distribution system further comprising processing fluid tubes rotatable with the drum structure, said spray nozzles in fluid flow communication with the processing fluid tubes.

3. An agitating retort according to Claim 2, wherein said spray nozzles are positioned along the processing fluid tubes to provide a substantially uniform supply of processing fluid along the length of the drum structure.

4. An agitating retort according to Claim 3, wherein the process fluid distribution tubes having at least one inlet, said spray nozzles positioned relative to the location of the distribution tube inlet to direct the substantial uniform supply of processing fluid along the length of the drum structure.

5. An agitating retort according to Claim 4, wherein the further the spray nozzles are located from the processing fluid distribution tube inlet, the closer the spray nozzles are positioned relative to each other.

6. An agitating retort according to Claim 4, wherein the spray nozzles are of a solid cone type.

7. The agitating retort according to Claim 1, wherein the spray nozzles emit a solid cone of process fluid.

8. An agitating retort according to Claim L wherein the at least one slack when in nominal orientation, said at least one stack comprising a plurality of vertically stacked layers, and
said spray nozzles located along the sides of said layers.

9. An agitating retort according to Claim 8, wherein the at least one stack comprises one or more structures for receiving a plurality content containing containers to be processed by the agitating retort, said structures defining side portions that are at least partially open to allow processing fluid from the spray nozzles to reach the containers positioned distal from The spray.

10. An agitating retort according to Claim 1, wherein the spray nozzles are positioned relative to each other to provide a substantially uniform supply of processing fluid to each stack within the drum.

11. apparatus for rotating one or more removable stacks deposed in a row, said one or more stacks defining side portions, the apparatus comprising a process fluid distribution system, the fluid distribution system comprising a plurality of nozzles for directing process fluid at the one or more stacks, said nozzles:
movable with the one or more rotating stacks; and
positioned adjacent the side portions of the one or more stacks to direct process fluid at the side portions of the one or more stacks

12. An apparatus according to Claim 11, wherein said process fluid nozzles are arranged to direct substantially uniform quantities of process fluid on each of the one or more stacks.

13. An apparatus according to Claim 12, wherein the substantial uniform quantity of processing fluid directed at each of the one or more stacks achieved by positioning the process fluid nozzles at selected distances relative to each other.

14. The apparatus according to Claim 13. wherein said fluid nozzles are of a solid cone type.

15. An apparatus according to Claim II, wherein said process fluid nozzles direct a solid cone of process fluid at the one or more stacks.

16. The apparatus according to Claim 11, wherein the process fluid distribution system further comprising a plurality of distribution tubes disposed along the sides of the one or more stacks, said process fluid nozzles in fluid communication with said distribution tubes.

17. The apparatus according to Claim 16. wherein said process fluid nozzles are positioned along the distribution tubes to direct a substantial uniform quantity of process fluid on each of the one or more stacks.

18. The apparatus according to Claim 17, wherein the distance separating adjacent fluid nozzles are selected to achieve substantially uniform flow of process fluid at each of the one or more stacks.

19. A method of processing product disposed in containers, comprising:
arranging the containers in stacks, said stacks defining side portions;
rotating the stacks;
directing processing fluid at the side portions of the stacks via spray nozzles that move with the stacks.

20. The process according to Claim 19. wherein the spray nozzles are positioned in stationary locations relative to the stacks during processing of the containers.

21. The process according to Claim 19, wherein the spray nozzles are positioned so that a substantial uniform quantity of process fluid is directed at each of the stacks.

22. The method according to Claim 19, wherein the nozzles are in fluid flow communication with a process fluid distribution subsystem, said subsystem is in turn in fluid flow communication with a source of process fluid.
